(19) Europäisches Patentamt / European Patent Office / Office européen des brevets

(11) **EP 1 971 052 B2**

(12) **NEW EUROPEAN PATENT SPECIFICATION**
After opposition procedure

(45) Date of publication and mention
of the opposition decision:
**11.02.2015 Bulletin 2015/07**

(45) Mention of the grant of the patent:
**16.05.2012 Bulletin 2012/20**

(21) Application number: **05822752.1**

(22) Date of filing: **20.12.2005**

(51) Int Cl.:
**H04B 10/2513** $^{(2013.01)}$

(86) International application number:
**PCT/CN2005/002249**

(87) International publication number:
**WO 2007/071105 (28.06.2007 Gazette 2007/26)**

(54) **AN APPARATUS AND METHOD FOR SELF-ADAPTIVE DISPERSION COMPENSATING**

VORRICHTUNG UND VERFAHREN ZUR SELBSTANPASSENDEN DISPERSIONSKOMPENSATION

APPAREIL ET PROCEDE DE COMPENSATION DE DISPERSION AUTO-ADAPTATIVE

(84) Designated Contracting States:
**AT BE BG CH CY CZ DE DK EE ES FI FR GB GR HU IE IS IT LI LT LU LV MC NL PL PT RO SE SI SK TR**

(43) Date of publication of application:
**17.09.2008 Bulletin 2008/38**

(73) Proprietor: **ZTE Corporation**
**518057 Shenzhen,**
**Guangdong (CN)**

(72) Inventor: **SHU, Huade**
**Guangdong 518057 (CN)**

(74) Representative: **Novagraaf Technologies**
**Bâtiment O2**
**2, rue Sarah Bernhardt**
**CS90017**
**92665 Asnières-sur-Seine Cedex (FR)**

(56) References cited:
| | |
|---|---|
| EP-A2- 1 385 281 | EP-A2- 1 439 647 |
| EP-A2- 1 580 906 | WO-A2-2004/077111 |
| WO-A2-2004/077111 | CN-A- 1 674 475 |
| JP-A- 2005 252 601 | US-A1- 2003 011 847 |
| US-A1- 2003 011 847 | |

EP 1 971 052 B2

## Description

## Technical Field

The present invention relates to the field of optical transmission system, and more specifically to an apparatus for adaptive dispersion compensation and the method thereof.

## Technology Background

With rapid development of the optical communication technology, the optical communication system develops toward the direction of high speed, large capacity, long distance and intelligence. Nowadays, Dense Wavelength Division Multiplexing (DWDM) optical communication system with 160 channels and, 10Gb/s single-channel speed, as well as the Automatically Switched Optical Network (ASON) system based on intelligent circuit switching has also been commercially applied. In the future, optical network systems with larger capacity and higher speed (40Gb/s or above) and intelligent optical network systems having the function of Optical Cross Connect (OXC) or Reconfigurable Optical Add/Drop Multiplexer (ROADM) will appear.

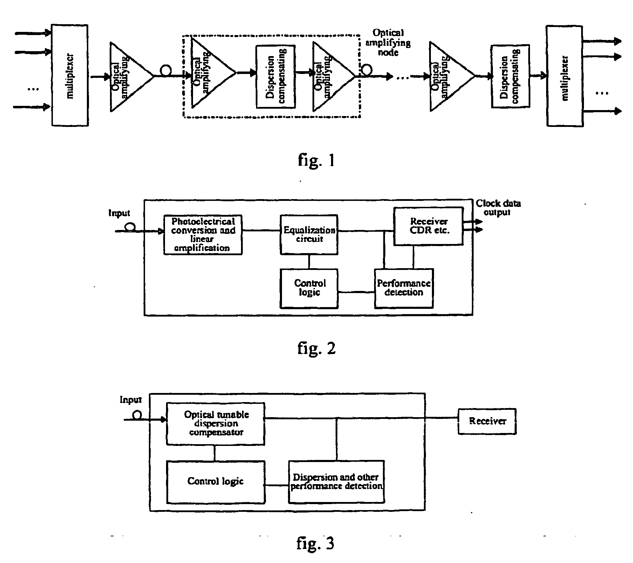

In ultra-high speed optical transmission system, dispersion and polarization mode dispersion (PMD) deteriorate the optical signal quality and reduce the transmission distance. In order to increase the transmission distance of the optical transmission system, measures should be taken to compensate the dispersion and PMD. In the conventional optical communication system, fixed dispersion compensators are often applied to compensate the dispersion in the optical transmission line, and Figure 1 is the block diagram of dispersion compensation means for the conventional optical communication system. Due to dispersion compensation, the residual dispersion of the optical signals at the receiving side can be controlled within the range of which the receiver can tolerate. The dispersion compensator is generally implemented by the dispersion compensation optical fiber module which can be placed in the optical terminal station as well as the optical regeneration station. In the optical terminal station, the dispersion compensation module is generally used to perform dispersion compensation for multi-channel optical signals in DWDM system before wavelength multiplexing and after wavelength de-multiplexing. In the optical regeneration station, two-stage optical amplifier structure is mostly applied and the dispersion compensation optical fiber module can be placed between the two-stage amplifiers to implement the multi-channel dispersion compensation.

For long-distance optical transmission system, factors such as temperature and pressure can cause small variation of the dispersion coefficient of the optical fiber line, thus the real-time change of dispersion of the optical signal in the line will continually accumulate along with the increase of the total transmission distance, which probably causes the residual dispersion of the signal at the receiving side exceeds the tolerable range and deteriorates the bit error performance of the system.

With the increase of the single-channel transmission speed, the dispersion tolerance of the optical source will decrease. The dispersion tolerance is about 1000ps/nm for the 10Gb/s optical signal without pre-chirp, and about 40ps/nm for 40Gb/s optical signal without pre-chirp, which is only equivalent to 2km transmission distance of 1550nm window of G652 optical fiber. Therefore, we can say that for 40Gb/s system, since the dispersion tolerance of the optical source is relatively small, any small changes of the dispersion of the optical fiber line can cause the residual dispersion of the signal at the receiving side to exceed the tolerable range and deteriorate the bit error performance of the system. The influence of the change of the fiber dispersion is especially evident for the performance of the 40Gb/s system.

On the other side, with the development of the intelligent optical network, ROADM and even OXC nodes may be introduced into the optical network. In these optical network nodes, dynamic add/drop multiplexing and dynamic cross connecting of the optical signal can cause the changes of the dispersion of the optical line through which the optical signal transmits, thus causing the residual dispersion of the signal at the receiving side to exceed the tolerable range and deteriorate the bit error performance of the system.

In a word, the above factors indicate that with the development of the optical network in the direction of high speed, long distance and intelligence, the residual dispersion of the signal at the receiving side will continually change due to the variation of the dispersion of the line and the optical network nodes after the optical signal are transmitted through the line. It is necessary to perform adaptive dispersion compensation for these signals whose residual dispersion continually changes, how to achieve the adaptive dispersion compensation is a key problem in the technical field.

The adaptive dispersion compensation of the optical transmission system can be optically or electrically implemented by the tunable dispersion compensator.

There are many methods to achieve electrical dispersion compensation. As shown in Figure 2 which is a schematic block diagram of the receiver with the capability of electrical dispersion compensation, after the optical signal is photoelectrical converted and linear amplified, it is sent to the equalization circuit. Using some control strategy and the performance of the feedback control equalizer, checking the quality of the electrical signal after equalized, the adaptive dispersion compensation can be realized. The feature of this method is that the implementation method is simple and the response is fast, yet the range of dispersion compensation is narrow and only single-channel dispersion compensation can be implemented. The equalization circuit applied for electrical dispersion compensation can be Feed-forward Equalizer (FFE), Decision Feedback Equalizer (DFE), Fixed Delay Tree Search (FDTS) or Maximum Likelihood Sequence Estimation (MLSE), or their combinations. For the electrical dispersion compensation technology, the dispersion value to be compensated is generally small. For example, for 10Gb/s signal, the electrical dispersion compensation equals to increasing 20~40cm transmission distance in G.652 optical fiber.

Figure 3 is a schematic block diagram of applying optical tunable dispersion compensator to implement adaptive dispersion compensation, the adaptive dispersion compensation function can be implemented by detecting the residual dispersion of the system, or the bit error performance of the system to control the dispersion compensation quantity of the tunable dispersion compensator through feedback. There are many methods for implementing the optical tunable dispersion compensation, including methods applying chirped fiber Bragg grating (CFBG) technology, interference technology based on G-T (Gires-Tournois) etalon, the technology based on micro electro mechanical systems (MEMS), PLC (Planner Lightwave Circuit) ring resonant cavity and multistage dispersion compensation module (DCM) cascade.

For the adaptive dispersion compensation method shown in Figure 3, the performance detected by the adaptive dispersion compensator can also be residual dispersion, as described in patent WO161889; or the shape of the optical signal, as described in patents US6515779, US6266170. The deficiency of implementing the adaptive dispersion compensation by detecting residual dispersion is: the technology is complex and the method is hard to implement, and nonlinear effect and the polarization mode dispersion (PMD) can directly affect the precision of dispersion detection; for multi-channel signal, the residual dispersion information of each channel is needed for dispersion adjustment, and the method is relatively complicated; the accuracy of the residual dispersion detection and the detection time directly affect the performance of the adaptive dispersion compensator. The deficiency of implementing the adaptive dispersion compensation by detecting the bit error performance of the system is: the bit error detection relates with the code type and affects the adaptability of the adaptive dispersion compensation system; there are many factors to cause the bit error of the system, the implementation method of adjusting dispersion according to the bit error performance is relatively complicated; during the process of adjusting the adaptive dispersion compensation, usually several adjustments should be performed according to the bit error performance, which increases the time for dispersion adjustment.

EP 1385281 A2 discloses a method of monitoring a dispersion variation amount in two or more of wavelength channels in order to know an influence amount of a temperature dependency of a dispersion slope in a wavelength division multiplexing optical transmission system. This document also discloses a method of compensating a wavelength dependency of a temperature dependency of the dispersion by providing an appropriate dispersion individually to the channels or summarizingly for all of bandwidths based on the monitored dispersion variation amounts.

EP 1439647 A2 discloses a method for suitably adjusting a tunable dispersion compensator whose passband center wavelength changes when the amount of dispersion compensation is changed. The relationship between temperature for keeping the center wavelength constant and the amount of dispersion compensation is stored in advance. After controlling the amount of dispersion compensation to achieve best or optimum transmission quality, the amount of dispersion compensation is converted into temperature in accordance with the stored relationship and, based on that, the temperature is controlled to keep the center wavelength constant.

EP 1580906 A2 discloses a dispersion compensating method for compensating wavelength dispersion occurring in an optical transmission line, includes the steps of: a) performing dispersion compensation by causing an optical signal, supplied from the transmission line, to pass through a variable dispersion compensator; and b) controlling a dispersion compensating amount in the variable dispersion compensator according to code error information corresponding to a type of code in a received data signal obtained from receiving the optical signal having undergone the dispersion compensation.

Altogether, if adaptive dispersion compensation is implemented by directly detecting the residual dispersion, the effects of non-linear, PMD, and etc. will directly affect the precision of dispersion detection; while the indirect dispersion detection method by applying bit error detection is related to the frame structure applied by the system, and it often needs to be implemented through several adjustments, and the time for dispersion adjustment is relatively long.

## Summary of the Invention

The technical problem to be solved in the present invention is to offer an apparatus for adaptive dispersion compensation and the method thereof to overcome the deficiency of the prior art, and the apparatus can adaptively compensate dispersion of the system in real time and effectively guarantee the transmission quality of the signal in the system.

The present invention provides an apparatus according to claim 1

The present invention also offers a method according to claim 7

Wherein, said step of detecting dispersion performance is to detect by a distributed system distributed at each node in said optical communication system, with the information exchange among the nodes being performed by a physical channel.

The step of calculating the adjustment value of the optical tunable dispersion compensation comprises: obtaining the dispersion performance information through the signaling transmission among the nodes when the change of the dispersion performance of the channel is detected while the relevant line topology does not change, calculating the adjustment value of the dispersion of the tunable dispersion compensator. The step further comprises: setting the optical dispersion compensator to the corresponding value according to said dispersion adjustment value.

The step of calculating the adjustment value of the optical tunable dispersion compensation includes: originating a signaling to search new route and obtaining the dispersion information through the signaling transmission among the nodes when the changes of the dispersion performance in the channel and the relevant line topology are detected; after a suitable new route is found, calculating the adjustment value of the tunable dispersion compensator based on the obtained dispersion information; the step further includes: while switching the system to the new route, setting the optical dispersion compensator to the corresponding value according to said dispersion adjustment value.

The apparatus for adaptive dispersion compensation and the method thereof of the present invention can be applied in multi-channel or single-channel system to implement adaptive dispersion compensation for multi-channel or single-channel system in the condition that the dispersion of the line or the optical network nodes changes.

**Brief Description of Drawings**

Figure 1 is an illustration of dispersion compensation in the conventional optical communication system;

Figure 2 is a schematic block diagram of applying the optical tunable dispersion compensator to implement adaptive dispersion compensation;

Figure 3 is a schematic block diagram of applying the electrical tunable dispersion compensator to implement adaptive dispersion compensation;

Figure 4 is a schematic block diagram of the apparatus for adaptive dispersion compensation in accordance with an embodiment of the present invention;

Figure 5 is a block diagram of the position of the apparatus for adaptive dispersion compensation in the optical communication system in accordance with an embodiment of the present invention;

Figure 6 is a flow chart of the method for adaptive dispersion compensation in accordance with an embodiment of the present invention;

Figure 7 is a functional block diagram of the apparatus for adaptive dispersion compensation to implement single-channel adaptive dispersion compensation at the receiving side;

Figure 8 is a functional block diagram of the apparatus for adaptive dispersion compensation to implement multi-channel adaptive dispersion compensation at the receiving side;

Figure 9 is a functional block diagram of implementing single-channel adaptive dispersion compensation by the apparatus for adaptive dispersion compensation and the measures of electrical dispersion compensation;

Figure 10 is a functional block diagram of implementing multi-channel adaptive dispersion compensation by the apparatus for adaptive dispersion compensation and the measures of electrical dispersion compensation;

Figure 11 is an illustration of the increase of the system transmission distance after applying electrical dispersion compensation;

Figure 12 is a flow chart of implementing adaptive dispersion compensation by the apparatus for adaptive dispersion compensation.

**Preferred Embodiment of the Present Invention**

The technical scheme of the present invention and its beneficial effects will become obvious through the detailed description of the preferred embodiments with reference to the accompanying figures.

The core content of the present invention is: apply the signaling system unit to transmit the dispersion of the line or the optical network nodes and its change information (namely, dispersion performance information) in real time, and with this dispersion performance information, the control logic unit applies specified control strategy to calculate the adjustment value of the dispersion compensation, controls the tunable dispersion compensator through feedback, and adjusts the dispersion compensation value, thus achieving the purpose of adaptive dispersion compensation.

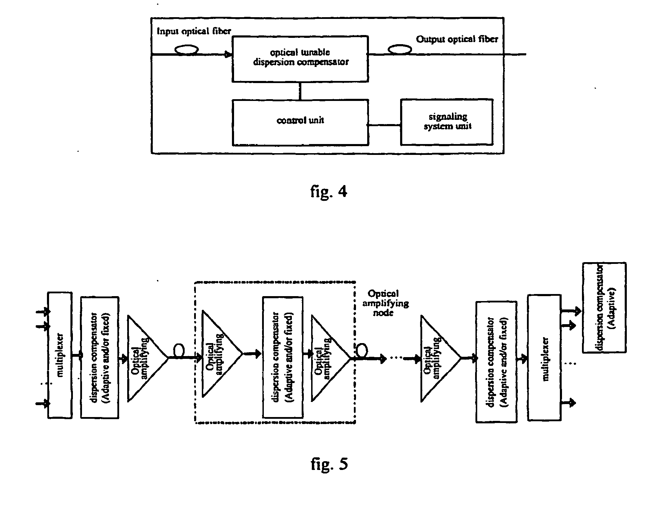

Figure 4 is a structural block diagram of the apparatus for adaptive dispersion compensation in accordance with the present invention. The apparatus can be applied in single-channel and multi-channel system and comprises five parts: input optical fiber, output optical fiber, optical tunable dispersion compensator, signaling system unit and control logic unit.

In Figure 4, the input optical fiber is used to input optical signal; the optical tunable dispersion compensator is used to compensate optically the dispersion of the optical signal from the input optical fiber; the output optical fiber is used to output the optical signal for which the optical dispersion compensation is performed; the signaling system unit is used to detect the dispersion performance information in the channel of the optical communication system; the control logic unit is used to calculate the adjustment value of the optical tunable dispersion compensator according to the dispersion performance information detected by the signaling system unit, control the optical tunable dispersion compensator through feedback and adjust the dispersion compensation quantity of the optical dispersion compensator.

The apparatus for adaptive dispersion compensation in accordance with the present invention can be placed at the transmitting side, receiving side of the optical communication system and the line optical amplifying nodes of the system. Wherein:

The control logic unit uses certain control strategy to control the optical tunable dispersion compensator through feedback according to the dispersion and its change information (namely, the dispersion performance information) detected by the signaling system unit, adjusts the dispersion compensation quantity of the optical tunable dispersion compensator until the optical signal channel reaches the optimum dispersion compensation. The strategy for the control logic unit to control the optical tunable dispersion compensator in which the dispersion value to be set for the tunable dispersion compensator is calculated and the adaptive adjustment of the dispersion is realized can use, but not limited to, the following strategy: the residual dispersion of the channel signal after adaptive dispersion compensated is controlled within a certain range.

The signaling system unit can be a distributed system distributed at each node of the system, and the information exchange between the node at which the apparatus for the adaptive dispersion compensation locates and the signal system unit of other each node can be performed through a physical channel.

The signaling system unit detects the optical signal channel from the source node to the terminal node to obtain the dispersion and its change information of each unit in the system, and the information includes, but not limited to, the following information: the dispersion tolerance of the transmitter, the minimal and maximal residual dispersions allowed by the receiver; the increased or decreased dispersion value of the ordinary optical amplifying node (without OXC or ROADM functions); the dispersion value of the optical fiber line; the equivalent dispersion of the non-linear effects of the optical fiber line, which is used to describe the influence caused by non-linear effects such as SPM (Self-phase Modulation) and pulse compression caused by effects such as SPM; the increased or decreased dispersion value of each channel related to the OAD conditions of ROADM optical transport node ; the increased or decreased dispersion value of each channel related to the OXC conditions of OXC optical transport node ; and other dispersion features of the network nodes or the network units which cause the dispersion change.

The method for the signaling system unit to detect the dispersion performance information can be, but not limited to, the following methods:

The static dispersion information of the network unit, including the dispersion tolerance of the transmitter, the residual dispersion allowed by the receiver, the increased or decreased dispersion value of the ordinary optical amplifying node (without OXC and ROADM functions); the dispersion of the optical fiber line; the equivalent dispersion of the non-linear effect of the optical fiber line, and so on, is reported to the signaling system unit by each network unit according to the pre-set information;

The increased or decreased dispersion value of each channel related to the OAD conditions of the ROADM optical transport node can be the dispersion information in different OAD condition reported by each network unit to the signaling system unit as well as the different pre-set OAD conditions, and the signaling system unit further analyzes to obtain the increased or decreased dispersion value of each channel related to the OAD conditions of ROADM optical transport node;

The increased or decreased dispersion value of each channel related to the OXC conditions of the OXC optical transport node can be the dispersion information in different OXC condition reported by each network unit to the signaling system unit as well as the different pre-set OXC conditions, and the signaling system unit further analyzes to obtain the increased or decreased dispersion value of each channel related to the OXC conditions of OXC optical transport node.

The signaling system unit transmits the dispersion of the channel from the source node to the target node and its change information, and the method for transmitting the information can be, but not limited to, the following methods:

The signaling system unit can originate information transmission when the line topology changes or the dispersion of certain component at the optical network node or the line changes, and through the information exchange among the nodes, transmit the dynamic dispersion performance information of the channel to be controlled in each part of the optical network system to the node at which the apparatus for adaptive dispersion compensation locates and eventually transmit the information to the control logic unit;

The signaling system unit can also timely originate the process of information exchange and timely transmit the dispersion performance information of the channel to be controlled in each part of the optical network system to the node at which the apparatus for adaptive dispersion compensation locates through the information exchange among the nodes and eventually transmit the information to the control logic unit;

The signaling system unit can also originate the process of information transmission at the time of the node initialization, transmit the dispersion performance information of the channel to be controlled in each part of the optical network system to the node at which the apparatus for adaptive dispersion compensation locates through the information exchange among the nodes and transmit the information to the control logic unit;

The method of information transmission for the signaling system unit can be a combination of the above methods.

The optical tunable dispersion compensator can be, but not limited to, the following compensators: various tunable dispersion compensators applying CFBG, interference technology with G-T etalon, MEMS (micro electromechanical system) technology, PLC ring resonate cavity and etc., and also can be the devices applying multi-stage fixed dispersion compensators cascade and using the optical switch to implement different dispersion compensation values, or any other optical devices that can achieve dispersion compensation.

Figure 5 is a block diagram of the position of the apparatus having the function of adaptive dispersion compensation in the optical communication system. The dispersion compensation of the system is divided into fixed dispersion compensation and optical tunable dispersion compensation. The former is used to statically compensate the dispersion of the line and the latter dynamically compensates the dispersion and further includes optical multi-channel tunable dispersion compensation and single-channel tunable dispersion compensation. As shown in Figure 5, the optical tunable dispersion compensation is implemented by the adaptive dispersion compensator, which is the apparatus for optical multi-channel tunable dispersion compensation or the optical single-channel tunable dispersion compensation placed at the transmitting side, receiving side of the optical communication system, or the line optical amplifying node of the system.

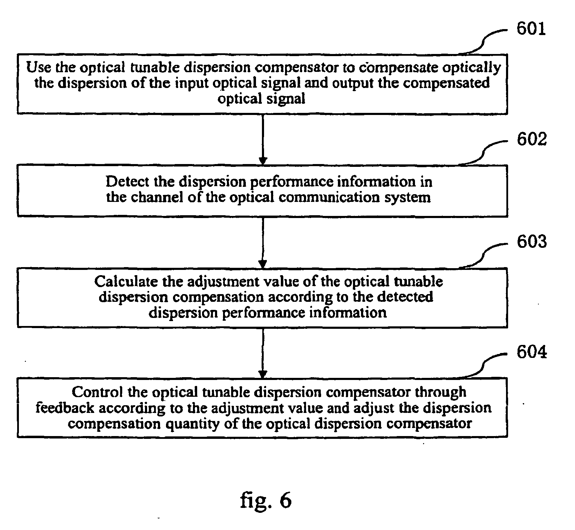

Figure 6 is a flow chart of adaptively compensating the dispersion in the optical signal channel by the apparatus for adaptive dispersion compensation, comprising:

Step 601: using the optical tunable dispersion compensator to compensate optically the dispersion of the input optical signals and output the compensated optical signals;

Step 602: detecting the dispersion performance information in the channel of the optical communication system;

Step 603: calculating the adjustment value of the optical tunable dispersion compensation according to the detected dispersion performance information;

Step 604: controlling the optical tunable dispersion compensator through feedback and adjusting the dispersion compensation quantity of the optical dispersion compensator based on the adjustment value.

The adaptive dispersion compensation apparatus of the present invention uses the dispersion information obtained by the signaling system unit to control the dispersion compensation quantity of the optical dispersion compensator. Wherein, the signaling system unit dynamically exchanges the dispersion information of each node in the line and the dispersion tolerance information of the optical source, the topology structure of the system, the changes of the transmission path of a certain wavelength or the changes of the dispersion performance of the optical source caused by OADM at the optical wavelength level of the ROADM node in the system, the changes of the transmission path of a certain wavelength or the changes of the dispersion performance of the optical source caused by the optical wavelength level crossconnect of the OXC node. The control logic unit calculates the optimum dispersion compensation quantity of the tunable dispersion compensator according to the information transmitted by the signaling system unit and sets the dispersion compensation value of the optical tunable dispersion compensator as the optimum value.

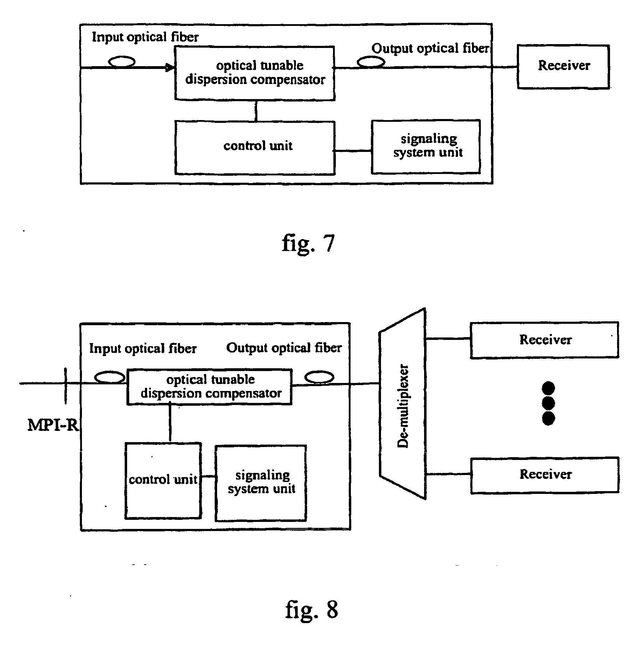

The following figures from Figure 7 to Figure 10 are several applications of the apparatus for adaptive dispersion compensation of the present invention in the system:

Figure 7 is a functional block diagram of the apparatus for adaptive dispersion compensation to implement single-channel adaptive dispersion compensation at the receiving side, which is used to implement the function of single-channel adaptive dispersion compensation;

Figure 8 is a functional block diagram of the apparatus for adaptive dispersion compensation to implement multi-channel adaptive dispersion compensation at the receiving side, which is used to implement the function of multi-channel adaptive dispersion compensation;

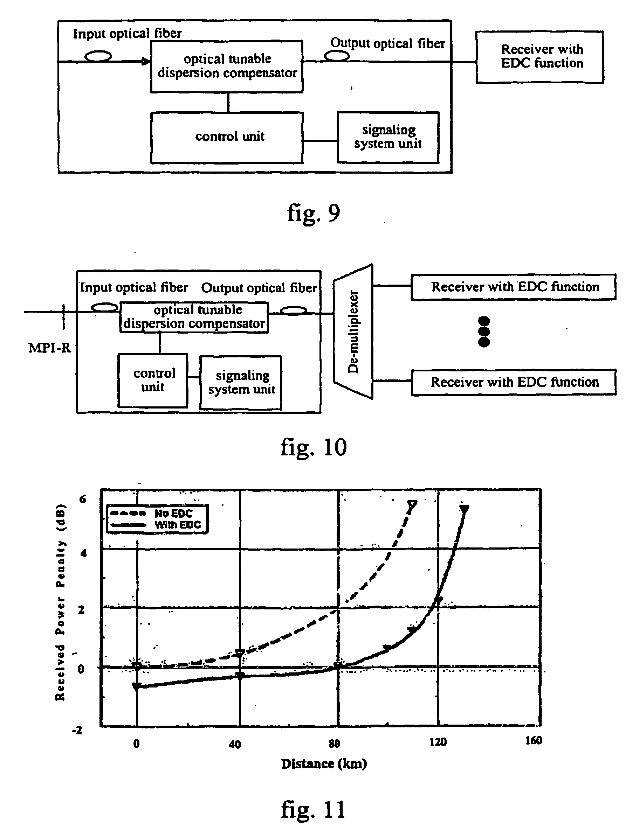

Figure 9 is a functional block diagram of implementing single-channel adaptive dispersion compensation by the apparatus for adaptive dispersion compensation and the measures of electrical dispersion compensation, which is used to implement the function of single-channel adaptive dispersion compensation; wherein the control of the electrical tunable dispersion compensator is controlled by detecting the performance of the single-channel signal through feedback;

Figure 10 is a functional block diagram of implementing multi-channel adaptive dispersion compensation by the apparatus for adaptive dispersion compensation and the measures of electrical dispersion compensation, which is used to implement the function of multi-channel adaptive dispersion compensation; wherein the control of the electrical tunable dispersion compensator is controlled by detecting the performance of the single-channel signal through feedback.

The electrical tunable dispersion compensator shown in Figure 9 and Figure 10 can be used to expand the receiver's tolerance capacity of the residual dispersion. Figure 11 is an illustration of applying electrical dispersion compensation measure to extend the transmission distance of the 10Gb/s system, and it can be seen that for LiNbO3 modulated optical source, the regular optical fiber transmission distance is about 80km before applying electrical dispersion compensation and extends to 120km after applying electrical dispersion compensation.

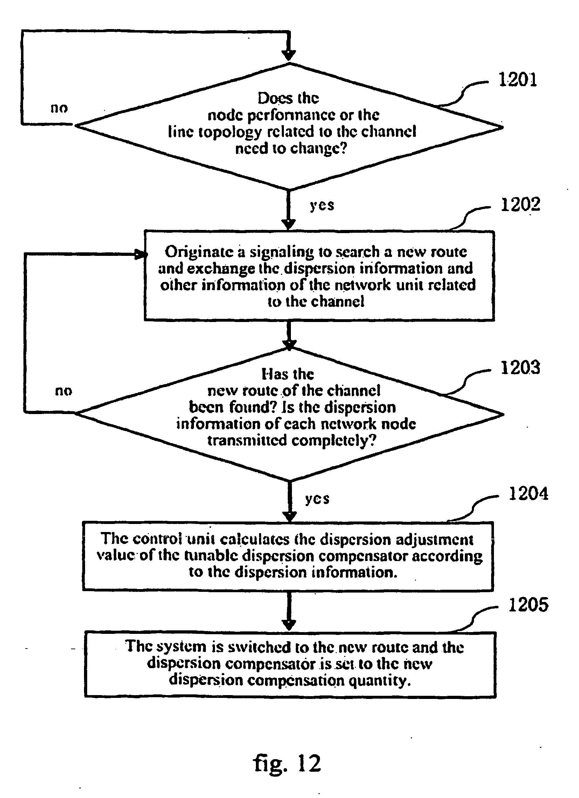

In the practical applications, there are many kinds of processes of adaptive dispersion compensation performed by the adaptive dispersion compensation apparatus of the present invention. Figure 12 is a flow chart of one of them.

Firstly, each node in the system detects whether the dispersion performance of the node or the line topology related to the channel needs to be changed or not (step 1201).

If only the dispersion performance changes, the signaling system unit originates a signaling and transmits the single dispersion information and other information of the network related to the channel to the controlled node of the adaptive dispersion compensator, calculates the dispersion adjustment value of the tunable dispersion compensator according to the dispersion information and sets the tunable dispersion compensator as the corresponding value when the dispersion information of each network node is exchanged completely;

If the line topology also changes and new route is needed to perform protection switching or restoration, the signaling system initializes the signaling process to search a new route and exchanges the single dispersion information and other information of the network related to the channel to the controlled node of the adaptive dispersion compensator (step 1202).

Whether a new route is found and the dispersion information of each network node is exchanged completely is determined (step 1203).

After the dispersion information of each network node is exchanged completely and a suitable route is found, the dispersion adjustment value of the tunable dispersion compensator is calculated according to the dispersion information (step 1204).

The tunable dispersion compensator is set as the corresponding value while the system is switched to the new route (step 1205).

As mentioned above, the signaling system unit detects and transmits the dispersion and its change of the line and each channel of the system. The dispersion performance of the related components in the optical communication system relates to the channel with corresponding wavelength, and the dispersion performance concludes the following aspects:

dispersion tolerance of the transmitter $C_{Tx}$;

the minimal residual dispersion $C_{min}$ and the maximal residual dispersion $C_{max}$ allowed by the receiver;

dispersion adjustment value of the tunable dispersion compensator $C_{adj}$;

the increased or decreased dispersion value of ordinary optical amplifying node (without OXC or ROADM functions) $C_{NEj}$;

dispersion of the optical fiber line $C_{Li}$, which is used to describe the dispersion value of the line;

equivalent dispersion of the non-linear effect of the optical fiber line $C_{NLi}$, which is used to describe the influence caused by the non-linear effect such as SPM; since the pulse compression caused by SPM is similar to the effect caused by dispersion, this item is listed here;

the increased or decreased dispersion value of each channel related to OAD condition of ROADM optical transport node $C_{NEj}$;

the increased or decreased dispersion value of each channel related to OXC condition of OXC optical transport node $C_{NEj}$;

The signaling system unit is a distributed system distributed at each optical network node in the system. The information exchange between the optical network node where the adaptive dispersion compensation apparatus locates and the signaling system unit between each optical network node is performed through a certain physical channel. And there are various physical channels.

The key object of the apparatus and method of the present invention is to feed back the dispersion performance of each part of the system of the channel in which the dispersion changes to the node where the tunable dispersion compensator locates through the information exchange among the nodes when the topology condition of the line changes or the dispersion of some component in the line or the optical network node subsystem changes. The control logic unit applies certain strategy to calculate the dispersion value needed to be set for the tunable dispersion compensator and sets the dispersion compensation value of the tunable dispersion compensator to this optimum position to implement adaptive dispersion adjustment according to the changes of dispersion of each channel in the system and the changes of the dispersion in the line obtained by the signaling system. There are various dispersion compensation strategies for the tunable dispersion compensator, and the simplest one is to adjust the dispersion compensation quantity of the dispersion compensator to control the residual dispersion value $C_{residual}$ of the system for which the dispersion compensation has been performed to a certain range ($C_{min} \sim C_{max}$).

$$C_{residual} = C_{Tx} - C_{adj} - \sum_i C_{Li} - \sum_i C_{NLi} - \sum_j C_{ONj}$$

$$C_{min} \le C_{residual} \le C_{max} \,$$

It should be understood that while the invention has been described with specific reference to the preferred embodiments, the true scope of the invention should not be limited thereto. Various modifications and alterations can be made by people skilled in the art based on the technical concept of the present invention, and all those modifications and alterations are intended to be included in the protection scope of the appended claims.

**Industrial Applicability**

An apparatus for adaptive dispersion compensation and the method thereof in accordance with the present invention can overcome the deficiency of the prior art, adaptively compensate the dispersion of the system in real time, effectively guarantee the transmission quality of the signals in the system, and can be applied to multi-channel or single-channel system to implement their adaptive dispersion compensation in the condition that the dispersion of the line or the nodes in the optical network changes.

**Claims**

1. An apparatus for adaptive dispersion compensation used for adaptive dispersion compensation in an optical communication system, the apparatus comprises:

   input optical fiber, which is adapted to input optical signals;
   an optical tunable dispersion compensator, which is adapted to optically compensate dispersion of the optical signals from the input optical fiber;
   output optical fiber, which is adapted to output the optical signals whose dispersion is optically compensated;
   a control logic unit, which is adapted to calculate an adjustment value of the optical tunable dispersion compensator, control said optical tunable dispersion compensator through feedback and adjust dispersion compensation quantity of said optical tunable dispersion compensator;
**characterized in that** the apparatus further comprises:

   a signaling system unit, which is adapted to detect dispersion performance information in a channel of said optical communication system according to a performance reports offered by each network unit in said optical communication system; and
   wherein the control logic unit is adapted to calculate the adjustment value of the optical tunable dispersion compensator according to the dispersion performance information detected by the signaling system unit;
   wherein said signaling system unit further exchanges the detected dispersion performance information to said control logic unit; wherein said signaling system unit exchanges the dispersion performance information of the optical channel to the control logic unit of the node at which the tunable dispersion compensator locates through signaling interaction among nodes when topology condition of a line of said optical communication system changes.

2. The apparatus of claim 1, wherein said signaling system unit is a distributed system, including several signaling system sub-units distributed at each node of said optical communication system and information exchange among the signaling system sub-units at each node is performed through a physical channel.

3. The apparatus of claim 1, wherein the dispersion performance information detected by said signaling system unit in the channel includes the following information or any combination thereof:

   dispersion tolerance of a transmitter;
   minimal and maximal residual dispersions allowed by a receiver;
   increased or decreased dispersion of an ordinary optical amplifying node;
   dispersion of optical fiber line;
   equivalent dispersion of non-linear effects of the optical fiber line;
   increased or decreased dispersion value of each channel related to Optical Add/Drop, OAD, conditions of Reconfigurable Optical Add/Drop Multiplexer, ROADM, optical transport node;
   increased or decreased dispersion value of each channel related to Optical Cross Connect, OXC, conditions of Optical Cross Connect, OXC, optical transport node.

4. The apparatus of claim 1, wherein said signaling system unit timely transmits the dispersion performance information of the optical channel to the control logic unit of the node at which the tunable dispersion compensator locates through the signaling interaction among the nodes.

5. The apparatus of claim 1, wherein said signaling system unit send the dispersion performance information of the optical channel to the control logic unit of the node at which the optical tunable dispersion compensator locates through the information exchange among the nodes when the node at which the optical tunable dispersion compensator locates is initializing.

6. The apparatus of claim 1, wherein said optical tunable dispersion compensator is a tunable dispersion compensator applying chirped fiber Bragg grating, interference technology with Gires-Tournois etalon, micro electromechanical system technology or Planner Lightwave Circuit, PLC, ring resonate cavity technology, or a device applying multi-stage fixed dispersion compensator cascade and using an optical switch to implement different dispersion compensation quantity.

7. A method for adaptive dispersion compensation to be used for adaptive dispersion compensation in an optical communication system, **characterized in that** the method comprises the following steps of:

    using an optical tunable dispersion compensator to compensate optically the dispersion of input optical signals and output the compensated optical signals (601);
    calculating an adjustment value of optical tunable dispersion compensation;
    controlling the optical tunable dispersion compensator through feedback according to the adjustment value and adjusting dispersion compensation quantity of said optical tunable dispersion compensator (604);
    **characterized in that** the method further comprises the step of:

        detecting dispersion performance information in channel of said optical communication system (602) based on a performance reports offered by each network unit in the optical communication system; and
        wherein the step of calculating comprises calculating the adjustment value of optical tunable dispersion compensation according to the detected dispersion performance information (603);

    said step of calculating the adjustment value of the optical tunable dispersion compensation includes: originating a signaling to search a new route and obtaining said dispersion performance information through signaling transmission among the nodes when changes of the dispersion performance in the channel and the relevant line topology are detected:
    after a suitable new route is found, calculating the adjustment value of the tunable dispersion compensator based on the obtained dispersion information;
    said step of controlling the optical tunable dispersion compensator through feedback includes: setting said optical dispersion compensator to a corresponding value according to said dispersion adjustment value while the system switches to the new route.

8. The method of claim 7, wherein said step of detecting dispersion performance is to detect by a distributed system distributed at each node in said optical communication system, and information exchange among the nodes is performed by a physical channel.

9. The method of claim 7, wherein said detected dispersion performance information includes the following information or any combination thereof:

    dispersion tolerance of a transmitter;
    minimal and maximal residual dispersions allowed by a receiver;
    increased or decreased dispersion of an ordinary optical amplifying node;
    dispersion of optical fiber line;
    equivalent dispersion of non-linear effects of the optical fiber line;
    increased or decreased dispersion value of each channel related to Optical Add/Drop, OAD, conditions of Reconfigurable Optical Add/Drop Multiplexer, ROADM, optical transport node;
    increased or decreased dispersion value of each channel related to Optical Cross Connect, OXC, conditions of Optical Cross Connect, OXC, optical transport node.

10. The apparatus of claim 7, wherein said optical tunable dispersion compensator is a tunable dispersion compensator applying chirped fiber Bragg grating, or interference technology with Gires-Toumois etalon, or micro electromechanical system technology, or Planner Lightwave Circuit, PLC, ring resonate cavity technology, or a device applying multi-stage fixed dispersion compensator cascade and using an optical switch to implement different dispersion compensation quantity.

**Patentansprüche**

1. Vorrichtung für adaptive Dispersionskompensation zum Gebrauch für adaptive Dispersionskompensation in einem optischen Kommunikationssystem, wobei die Vorrichtung folgendes umfasst:

   optische Eingangsfaser, die zum Eingeben optischer Signale geeignet ist;
   einen optischen abstimmbaren Dispersionskompensator, der zum optischen Kompensieren der optischen Signale von der optischen Eingangsfaser geeignet ist;
   optische Ausgangsfaser, die zum Ausgeben der optischen Signale geeignet ist, deren Dispersion optisch kompensiert ist;
   eine Steuerlogikeinheit, die zum Berechnen eines Einstellwerts des optischen abstimmbaren Dispersionskompensators, Steuern des optischen abstimmbaren Dispersionskompensators über Rückmeldung und Einstellen einer Dispersionskompensationsmenge des optischen abstimmbaren Dispersionskompensators geeignet ist;
   **dadurch gekennzeichnet, dass** die Vorrichtung ferner folgendes umfasst:

   eine Signalisiersystemeinheit, die zum Erkennen von Dispersionsleistungsinformation in einem Kanal des optischen Kommunikationssystems gemäß einem Leistungsbericht, der von jeder Netzwerkeinheit im optischen Kommunikationssystem angeboten wird, geeignet ist; und
   wobei die Steuerlogikeinheit zum Berechnen des Einstellwerts des optischen abstimmbaren Dispersionskompensators gemäß der Dispersionsleistungsinformation, die durch die Signalisiersystemeinheit erkannt wird, geeignet ist;
   wobei die Signalisiersystemeinheit die erkannte Dispersionsleistungsinformation ferner zur Steuerlogikeinheit vermittelt; wobei die Signalisiersystemeinheit die Dispersionsleistungsinformation des optischen Kanals ferner zur Steuerlogikeinheit des Knotens vermittelt, an dem sich der abstimmbare Dispersionskompensator befindet, durch Siganlisierinteraktion unter Knoten, wenn sich die Topologiebedingung einer Leitung des optischen Kommunikationssystems ändert.

2. Vorrichtung nach Anspruch 1, wobei die Signalisiersystemeinheit ein verteiltes System ist, das mehrere Signalisiersystemuntereinheiten an jedem Knoten des optischen Kommunikationssystems enthält, und Informationsaustausch unter den Signalisiersystemuntereinheiten an jedem Knoten über einen physikalischen Kanal ausgeführt wird.

3. Vorrichtung nach Anspruch 1, wobei die Dispersionsleistungsinformation, die durch die Signalisiersystemeinheit im Kanal erkannt wird, die folgende Information oder jegliche Kombination davon enthält:

   Dispersionstoleranz eines Senders;
   minimale und maximale Restdispersionen, die vom Empfänger zugelassen sind;
   erhöhte oder verringerte Dispersion eines gewöhnlichen optischen Verstärkungsknotens;
   Dispersion der optischen Faserleitung;
   äquivalente Dispersion nichtlinearer Effekte der optischen Faserleitung;
   erhöhter oder verringerter Dispersionswert jedes Kanals, der optischem Add/Drop-, OAD, Bedingungen von rekonfigurierbarem optischen Add/Drop-Multiplexer, ROADM, optischem Transportknoten zugeordnet ist;
   erhöhter oder verringerter Dispersionswert jedes Kanals, der Optical Cross Connect, OXC, Bedingungen von Optical Cross Connect, OXC, optischen Transportknoten zugeordnet ist.

4. Vorrichtung nach Anspruch 1, wobei die Signalisiersystemeinheit die Dispersionsleistungsinformation des optischen Kanals zeitgerecht zur Steuerlogikeinheit des Knotens, an dem sich der abstimmbare Dispersionskompensator befindet, durch die Signalisierinteraktion unter den Knoten überträgt.

5. Vorrichtung nach Anspruch 1, wobei die Signalisiersystemeinheit die Dispersionsleistungsinformation des optischen Kanals zur Steuerlogikeinheit des Knotens, an dem sich der abstimmbare Dispersionskompensator befindet, durch den Informationsaustausch unter den Knoten sendet, wenn der Knoten, an dem sich der optische abstimmbare Dispersionskompensator befindet, initialisiert.

6. Vorrichtung nach Anspruch 1, wobei der optische abstimmbare Dispersionskompensator ein abstimmbarer Dispersionskompensator ist, der Chirped Fiber Bragg Grating, Interferenztechnologie mit Gires-Tournois-Etalon, mikroelektromechanische Systemtechnologie oder Planner Lightwave Circuit-, PLC-, Ringhohlraumresonatortechnologie anwendet, oder ein Gerät, das mehrstufige festgelegte Dispersionskompensatorkaskade anwendet und einen optischen Schalter zum Implementieren von unterschiedlicher Dispersionskompensationsmenge nutzt.

7. Verfahren zur adaptiven Dispersionskompensation zum Gebrauch für adaptive Dispersionskompensation in einem optischen Kommunikationssystem, **dadurch gekennzeichnet, dass** das Verfahren die folgenden Schritte umfasst:

Verwenden eines optischen abstimmbaren Dispersionskompensators zum optischen Kompensieren der Dispersion optischer Eingangssignale und Ausgeben der kompensierten optischen Signale (601);
Berechnen eines Einstellwerts optischer abstimmbarer Dispersionskompensation;
Steuern des optischen abstimmbaren Dispersionskompensators über Rückmeldung gemäß dem Einstellwert und Einstellen einer Dispersionskompensationsmenge des optischen abstimmbaren Dispersionskompensators (604);
**dadurch gekennzeichnet, dass** das Verfahren ferner die folgenden Schritte umfasst:

Erkennen von Dispersionsleistungsinformation in einem Kanal des optischen Kommunikationssystems (602) auf Grundlage eines Leistungsberichts, der von jeder Netzwerkeinheit im optischen Kommunikationssystem angeboten wird; und
wobei der Schritt des Berechnens das Berechnen des Einstellwerts optischer abstimmbarer Dispersionskompensation gemäß der erkannten Dispersionsleistung umfasst (603);
wobei der Schritt des Berechnens des Einstellwerts der optischen abstimmbaren Dispersionskompensation folgendes umfasst:

Erzeugen einer Signalisierung zum Suchen einer neuen Route und Erfassen der Dispersionsleistungsinformation über Signalisierungsübertragung unter den Knoten, wenn Änderungen der Dispersionsleistung in dem Kanal und der relevanten Leitungstopologie erkannt werden;

nach dem Auffinden einer geeigneten neuen Route, Berechnen des Einstellwerts des abstimmbaren Dispersionskompensators auf Grundlage der erfassten Dispersionsinformation;
wobei der Schritt des Steuerns des optischen abstimmbaren Dispersionskompensators über Rückmeldung folgendes umfasst:

Einstellen des optischen Dispersionskompensators auf einen entsprechenden Wert gemäß dem Dispersionseinstellwert, während das System zur neuen Route schaltet.

8. Verfahren nach Anspruch 7, wobei der Schritt des Erkennens von Dispersionsleistung zum Erkennen durch ein verteiltes System ist, das an jedem Knoten im optischen Kommunikationssystem verteilt ist und Informationsaustausch unter den Knoten durch einen physikalischen Kanal ausgeführt wird.

9. Verfahren nach Anspruch 7, wobei die erkannte Dispersionsleistungsinformation die folgende Information oder jegliche Kombination davon umfasst:

Dispersionstoleranz eines Senders;
minimale und maximale Restdispersionen, die vom Empfänger zugelassen sind;
erhöhte oder verringerte Dispersion eines gewöhnlichen optischen Verstärkungsknotens;
Dispersion der optischen Faserleitung;
äquivalente Dispersion nichtlinearer Effekte der optischen Faserleitung;
erhöhter oder verringerter Dispersionswert jedes Kanals, der optischem Add/Drop-, OAD, Bedingungen von rekonfigurierbarem optischen Add/Drop-Multiplexer, ROADM, optischem Transportknoten zugeordnet ist;
erhöhter oder verringerter Dispersionswert jedes Kanals, der Optical Cross Connect, OXC, Bedingungen von Optical Cross Connect, OXC, optischen Transportknoten zugeordnet ist.

10. Vorrichtung nach Anspruch 7, wobei der optische abstimmbare Dispersionskompensator ein abstimmbarer Dispersionskompensator ist, der Chirped Fiber Bragg Grating oder Interferenztechnologie mit Gires-Tournois-Etalon oder mikroelektromechanische Systemtechnologie oder Planner Lightwave Circuit-, PLC-, Ringhohlraumresonatortechnologie anwendet, oder ein Gerät, das mehrstufige festgelegte Dispersionskompensatorkaskade anwendet und einen optischen Schalter zum Implementieren von unterschiedlicher Dispersionskompensationsmenge nutzt.

**Revendications**

1. Appareil de compensation de dispersion adaptative utilisé pour une compensation de dispersion adaptative dans un système de communication optique, l'appareil comprenant :

une fibre optique d'entrée, qui est adaptée pour entrer des signaux optiques ;
un compensateur optique de dispersion accordable, qui est adapté pour compenser optiquement la dispersion des signaux optiques provenant de la fibre optique d'entrée ;
une fibre optique de sortie, qui est adaptée pour délivrer en sortie les signaux optiques dont la dispersion est compensée optiquement ;

une unité logique de commande, qui est adaptée pour calculer une valeur d'ajustement du compensateur optique de dispersion accordable, commander ledit compensateur optique de dispersion accordable par rétroaction et ajuster une quantité de compensation de dispersion dudit compensateur optique de dispersion accordable ;

**caractérisé en ce que** l'appareil comprend en outre :

une unité de système de signalisation, qui est adaptée pour détecter des informations de performance de dispersion sur un canal dudit système de communication optique en fonction d'un rapport de performance procuré par chaque unité de réseau dans ledit système de communication optique ; et où l'unité logique de commande est adaptée pour calculer la valeur d'ajustement du compensateur optique de dispersion accordable en fonction des informations de performance de dispersion détectées par l'unité de système de signalisation ;

où ladite unité de système de signalisation échange en outre les informations de performance de dispersion détectées avec ladite unité logique de commande ; où ladite unité de système de signalisation échange les informations de performance de dispersion du canal optique avec l'unité logique de commande du noeud au niveau duquel le compensateur de dispersion accordable se trouve par une interaction de signalisation entre des noeuds lorsqu'une condition de topologie d'une ligne dudit système de communication optique change.

**2.** Appareil selon la revendication 1, dans lequel ladite unité de système de signalisation est un système réparti, comportant plusieurs unités secondaires de système de signalisation réparties au niveau de chaque noeud dudit système de communication optique et un échange d'informations entre les unités secondaires de système de signalisation au niveau de chaque noeud est effectué par l'intermédiaire d'un canal physique.

**3.** Appareil selon la revendication 1, dans lequel les informations de performance de dispersion détectées par ladite unité de système de signalisation sur le canal comportent les informations suivantes ou n'importe quelle combinaison de celles-ci :

une tolérance de dispersion d'un émetteur ; des dispersions résiduelles minimale et maximale autorisées par un récepteur ;

une dispersion augmentée ou diminuée d'un noeud d'amplification optique ordinaire ; une dispersion de la ligne de fibre optique ; une dispersion équivalente d'effets non linéaires de la ligne de fibre optique ; une valeur de dispersion augmentée ou diminuée de chaque canal associée à des conditions d'insertion/d'extraction optique OAD du noeud de transport optique de multiplexeur d'insertion/d'extraction optique reconfigurable ROADM ; une valeur de dispersion augmentée ou diminuée de chaque canal associée à des conditions de dispositif d'interconnexion optique, OXC, d'un noeud de transport optique de dispositif d'interconnexion optique, OXC.

**4.** Appareil selon la revendication 1, dans lequel ladite unité de système de signalisation transmet au moment opportun les informations de performance de dispersion du canal optique à l'unité logique de commande du noeud au niveau duquel le compensateur de dispersion accordable se trouve par l'interaction de signalisation entre les noeuds.

**5.** Appareil selon la revendication 1, dans lequel ladite unité de système de signalisation envoie les informations de performance de dispersion du canal optique à l'unité logique de commande du noeud au niveau duquel le compensateur optique de dispersion accordable se trouve par l'échange d'informations entre les noeuds lorsque le noeud au niveau duquel le compensateur optique de dispersion accordable se trouve s'initialise.

**6.** Appareil selon la revendication 1, dans lequel ledit compensateur optique de dispersion accordable est un compensateur de dispersion accordable appliquant un réseau de Bragg sur fibre modulé, une technologie d'interférence avec un étalon Gires-Tournois, une technologie de système micro-électromécanique ou une technologie de cavité résonnante à anneau à circuit planaire à ondes lumineuses, PLC, ou un dispositif appliquant une cascade de compensateurs de dispersion fixe à étages multiples et utilisant un commutateur optique pour mettre en oeuvre une quantité différente de compensation de dispersion.

**7.** Procédé de compensation de dispersion adaptative à utiliser pour une compensation de dispersion adaptative dans un système de communication optique, **caractérisé en ce que** le procédé comprend les étapes suivantes consistant :

à utiliser un compensateur optique de dispersion accordable pour compenser optiquement la dispersion de signaux optiques d'entrée et pour délivrer en sortie les signaux optiques compensés (601) ;

à calculer une valeur d'ajustement de compensation optique de dispersion accordable ;

à commander le compensateur optique de dispersion accordable par rétroaction en fonction de la valeur d'ajustement et à ajuster une quantité de compensation de dispersion dudit compensateur optique de dispersion accordable (604) ;

**caractérisé en ce que** le procédé comprend en outre l'étape consistant à :

détecter des informations de performance de dispersion sur un canal dudit système de communication optique (602) sur la base d'un rapport de performance procuré par chaque unité de réseau dans le système de communication optique ; et

dans lequel l'étape de calcul comprend le fait de calculer la valeur d'ajustement de compensation optique de dispersion accordable en fonction des informations de performance de dispersion détectées (603) ;

ladite étape de calcul de la valeur d'ajustement de la compensation optique de dispersion accordable comporte le fait : d'émettre une signalisation pour rechercher un nouveau trajet et d'obtenir lesdites informations de performance de dispersion par l'intermédiaire d'une transmission de signalisation entre les noeuds lorsque des variations de la performance de dispersion sur le canal et de la topologie de ligne pertinente sont détectées ;

après qu'un nouveau trajet approprié a été trouvé, calculer la valeur d'ajustement du compensateur de dispersion accordable sur la base des informations de dispersion obtenues ;

ladite étape de commande du compensateur optique de dispersion accordable par rétroaction comporte le fait : de paramétrer ledit compensateur optique de dispersion à une valeur correspondante en fonction de ladite valeur d'ajustement de dispersion pendant que le système commute vers le nouveau trajet.

8. Procédé selon la revendication 7, dans lequel ladite étape de détection de performance de dispersion consiste à détecter par un système réparti qui est réparti au niveau de chaque noeud dans ledit système de communication optique, et un échange d'informations entre les noeuds est effectué par l'intermédiaire d'un canal physique.

9. Procédé selon la revendication 7, dans lequel lesdites informations de performance de dispersion détectées comportent les informations suivantes ou n'importe quelle combinaison de celles-ci :

une tolérance de dispersion d'un émetteur ;
des dispersions résiduelles minimale et maximale autorisées par un récepteur ;
une dispersion augmentée ou diminuée d'un noeud d'amplification optique ordinaire ;
une dispersion de ligne de fibre optique ;
une dispersion équivalente d'effets non linéaires de la ligne de fibre optique ;
une valeur de dispersion augmentée ou diminuée de chaque canal associée à des conditions d'insertion/d'extraction optique OAD du noeud de transport optique de multiplexeur d'insertion/d'extraction optique reconfigurable ROADM ;
une valeur de dispersion augmentée ou diminuée de chaque canal associée à des conditions de dispositif d'interconnexion optique, OXC, d'un noeud de transport optique de dispositif d'interconnexion optique, OXC.

10. Appareil selon la revendication 7, dans lequel ledit compensateur optique de dispersion accordable est un compensateur de dispersion accordable appliquant un réseau de Bragg sur fibre modulé, ou une technologie d'interférence avec un étalon Gires-Tournois, ou une technologie de système micro-électromécanique ou une technologie de cavité résonnante à anneau à circuit planaire à ondes lumineuses, PLC, ou un dispositif appliquant une cascade de compensateurs de dispersion fixe à étages multiples et utilisant un commutateur optique pour mettre en oeuvre une quantité différente de compensation de dispersion.

fig. 1

fig. 2

fig. 3

fig. 4

fig. 5

601

```
┌─────────────────────────────────────────────────────────────────┐
│ Use the optical tunable dispersion compensator to compensate      │
│ optically the dispersion of the input optical signal and output   │
│ the compensated optical signal                                    │
└─────────────────────────────────────────────────────────────────┘
```

602

```
┌─────────────────────────────────────────────────────────────────┐
│ Detect the dispersion performance information in                  │
│ the channel of the optical communication system                  │
└─────────────────────────────────────────────────────────────────┘
```

603

```
┌─────────────────────────────────────────────────────────────────┐
│ Calculate the adjustment value of the optical tunable             │
│ dispersion compensation according to the detected                 │
│ dispersion performance information                                │
└─────────────────────────────────────────────────────────────────┘
```

604

```
┌─────────────────────────────────────────────────────────────────┐
│ Control the optical tunable dispersion compensator through        │
│ feedback according to the adjustment value and adjust the         │
│ dispersion compensation quantity of the optical dispersion        │
│ compensator                                                       │
└─────────────────────────────────────────────────────────────────┘
```

fig. 6

Input optical fiber

optical tunable
dispersion compensator

Output optical fiber

Receiver

control unit

signaling
system unit

fig. 7

Input optical fiber          Output optical fiber

optical tunable
dispersion compensator

MPI-R

control unit

signaling
system unit

De-multiplexer

Receiver

Receiver

fig. 8

Input optical fiber

optical tunable
dispersion compensator

Output optical fiber

Receiver with
EDC function

control unit

signaling
system unit

## fig. 9

Input optical fiber    Output optical fiber

optical tunable
dispersion compensator

MPI-R

control
unit

signaling
system unit

De-multiplexer

Receiver with EDC function

Receiver with EDC function

## fig. 10

Received Power Penalty (dB)

- - - - No EDC
——— With EDC

Distance (km)

## fig. 11

Does the
node performance or the
line topology related to the channel
need to change? — 1201

no

yes — 1202

Originate a signaling to search a new route
and exchange the dispersion information and
other information of the network unit related
to the channel

Has the
new route of the channel
been found? Is the dispersion
information of each network node
transmitted completely? — 1203

no

yes — 1204

The control unit calculates the dispersion adjustment
value of the tunable dispersion compensator according
to the dispersion information.

1205

The system is switched to the new route and the
dispersion compensator is set to the new
dispersion compensation quantity.

fig. 12

**EP 1 971 052 B2**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 161889 A
- US 6515779 B
- US 6266170 B
- EP 1385281 A2
- EP 1439647 A2
- EP 1580906 A2